# EUROPÄISCHE PATENTSCHRIFT

(11) **EP 1 456 273 B1**
(45) Veröffentlichungstag und Bekanntmachung des Hinweises auf die Patenterteilung: **29.12.2010**
(21) Anmeldenummer: 02797924.4
(22) Anmeldetag: 26.08.2002
(51) Int. Cl.: C08G 18/67, C08F 299/06

(54) **STRAHLENHÄRTBARE URETHANACRYLATE AUF BASIS EINER MISCHUNG VERSCHIEDENER OXALKYLIERTER POLYOLE**
RADIATION-CURABLE URETHANE ACRYLATES, BASED ON A BLEND OF VARIOUS OXYALKYLATED POLYOLS
ACRYLATES D'URETHANNE DURCISSANTS SOUS L'EFFET DE RAYONNEMENTS, A BASE D'UN MELANGE DE POLYOLS PRESENTANT DIFFERENTS DEGRES D'OXALKYLATION

(30) Priorität: 06.09.2001 DE 10143630
(43) Veröffentlichungstag der Anmeldung: 15.09.2004
(73) Patentinhaber: Bayer MaterialScience AG, 51368 Leverkusen (DE)
(72) Erfinder: WEIKARD, Jan, 51519 Odenthal (DE); FISCHER, Wolfgang, 40668 Meerbusch (DE); MÜLLER, Manfred, 41066 Mönchengladbach (DE); FÄCKE, Thomas, Bridgeville, PA 15017 (US); WITOSSEK, Herbert, 04157 Leipzig (DE)
(86) Internationale Anmeldenummer: PCT/EP2002/009500
(87) Internationale Veröffentlichungsnummer: WO 2003/022902

(56) Entgegenhaltungen:
- EP-A- 0 590 399
- US-A- 4 380 604

## Beschreibung

Die Erfindung betrifft neue niederviskose strahlenhärtbare Urethanacrylate, die zu Beschichtungen mit verbesserter Abriebbeständigkeit aushärten, sowie ihre Verwendung als Beschichtungsmittel insbesondere von Materialien für Fußböden.

Strahlungshärtbare Beschichtungsmittel auf Basis von Umsetzungsprodukten von hydroxyfunktionellen Estern der (Meth)Acrylsäure und Diisocyanaten werden als Urethanacrylate bezeichnet und sind beispielsweise bekannt aus P. K. T. Oldring (Ed.), Chemistry & Technology of UV & EB Formulations For Coatings, Inks & Paints, Vol. 2, 1991, SITA Technology, London, S. 73 - 123. Sie werden häufig zur Beschichtung von Parkett und anderen Materialien, die als Fußböden verwendet werden, genutzt. Solche Beschichtungsmittel zeigen meist eine hohe dynamischen Viskosität von typischerweise über 10000 mPa s (bei 23°C) und werden daher mit niedermolekularen Estern der Acrylsäure (Reaktivverdünnern) verdünnt und mit Zusatz von Fotoinitiatoren und gegebenenfalls von Additiven durch verschiedene Verfahren wie z.B. eine Walzapplikation auf zu beschichtende Substrate aufgebracht und anschließend durch Einwirkung von UV-Strahlung gehärtet. Durch die Verdünnung mit Reaktivverdünnern verlieren die Urethanacrylate häufig an wichtigen Eigenschaften wie Abriebfestigkeit und Zähelastizität. Es ist daher zweckmäßig, besonders niederviskose Urethanacrylate einzusetzen, um den Anteil an Reaktivverdünner gering zu halten. Als hydroxyfunktionelle Ester der (Meth)Acrylsäure kommen zur Herstellung der Urethanacrylate in den meisten Fällen 2-Hydroxyethylsowie 2-Hydroxypropylacrylat oder -methacrylat als industriell gut verfügbare Vorprodukte zum Einsatz. Die resultierenden Urethanacrylate sind unverdünnt jedoch hochviskos (vgl. Beispiele aus EP-A 168173).

Die EP-A 53749 lehrt die Herstellung von niederviskosen Urethanacrylaten auf Basis von Di- oder Polyisocyanaten, hydroxyfunktionellen Acrylsäureestern von 3 bis 4,5-fach oxalkyliertem Trimethylolpropan und optional eines Hydroxyalkylacrylats. In der zitierten Anmeldung wird durch Vergleichsversuche gezeigt, dass schon bei einem Oxethylierungsgrad von 7 entsprechende Produkte in ihren Beständigkeiten gegenüber polaren Lösungsmitteln unzureichend sind.

Aufgabe der vorliegenden Erfindung war es, niederviskose und gegen Lösungsmittel beständige Urethanacrylate mit gegenüber dem Stand der Technik verbesserten Abriebfestigkeiten bereitzustellen.

Es wurde gefunden, dass Urethanacrylate auf Basis von Di- oder Polyisocyanaten und hydroxyfunktionellen (Meth)acrylsäureestern von Mischungen von hoch- und niedrig oxalkylierten Polyolen niederviskos, beständig gegen Lösungsmittel und besonders abriebfest sind. Dies war überraschend, weil nicht zu erwarten war, dass ein wesentlicher Unterschied zwischen Urethanacrylaten besteht, die ein beispielsweise siebenfach ethoxyliertes Triol enthalten, und Urethanacrylaten, die eine Mischung aus höher und niedriger ethoxyliertem Triol enthalten, welche im Mittel einem siebenfach ethoxyliertem Triol entspricht.

Gegenstand der Erfindung sind daher niederviskose strahlenhärtbare Urethanacrylate erhältlich durch Umsetzung eines Di- und/oder Polyisocyanats mit einem hydroxyfunktionellen Partialester der Acryl- und/oder Methacrylsäure auf Basis einer Mischung verschieden oxalkylierter Polyole mit drei oder mehr Hydroxylgruppen, **dadurch gekennzeichnet, dass** die Mischung der oxalkylierten Polyole aus 25 bis 75 mol% Polyol eines Oxalhylierungsgrads zwischen 3 und 5 sowie 75 bis 25 mol% Polyol eines Oxalkylierungsgrads zwischen 8 und 25 besteht.

Gegenstand der Erfindung ist auch ein Verfahren zur Herstellung der erfindungsgemäßen Urethanacrylate durch ein zweistufiges Herstellverfahren dadurch gekennzeichnet, dass in der ersten Stufe oxalkylierte Polyole teilweise mit Acryl- und/oder Methacrylsäure [im folgenden als (Meth)acrylsäure bezeichnet] verestert und in der zweiten Stufe mit Di- und/oder Polyisocyanaten zur Reaktion gebracht werden. Gegenstand der Erfindung ist auch die Verwendung der Urethanacrylate als Bestandteil von Beschichtungsmitteln, die unter dem Einfluss von energiereicher Strahlung aushärten.

Als Basis der oxalkylierten Polyole werden drei- und höherwertige Alkohole des Molekulargewichtsbereichs 92 bis 254 wie z.B. Glycerin, Trimethylolpropan, Pentaerythrit, Ditrimethylolpropan, Dipentaerythrit oder Sorbit sowie deren Mischungen verwendet. Bevorzugt werden Glycerin und Trimethylolpropan. Oxalkylierungen finden nach an sich bekannten Methoden der Herstellung von Polyethern statt. Hierbei kommen als Monomere Ethylenoxid, Propylenoxid und Tetrahydrofuran, bevorzugt Ethylenoxid und/oder Propylenoxid zum Einsatz, wobei auch Mischungen bzw. verschiedene Monomere nacheinander (Erzeugung von "Blöcken") verwendet werden. Als Oxalkylierungsgrad wird die Stoffmenge Oxalkylierungs-Monomer bezogen auf die Stoffinenge Alkohol bezeichnet (z.B. 7,0 mol Ethylenoxid pro mol Trimethylolpropan entspräche einem Oxalkylierungsgrad von 7,0).

Wesentlich ist, dass zwei unterschiedlich oxalkylierte Polyole eingesetzt werden. Zum einen werden 25 bis 75 mol%, bevorzugt 30 bis 45 mol% Polyol eines Oxalkylierungsgrads zwischen 3 und 5 verwendet, zum anderen werden die zu 100 mol% fehlenden Teile, also 75 bis 25 mol%, bevorzugt 70 bis 55 mol% Polyol eines Oxalkylierungsgrads zwischen 8 und 25, bevorzugt zwischen 8 und 15, besonders bevorzugt zwischen 10 und 13 verwendet.

Die Mischung der oxalkylierten Polyole wird nach an sich bekannten Verfahren mit (Meth)Acrylsäure verestert, bevorzugt nach einem der Verfahren, bei dem Reaktionswasser durch ein Lösungsmittel, welches mit Wasser ein Azeotrop bildet (azeotropes Schleppmittel), destillativ entfernt wird. Es ist auch möglich, die verschiedenen oxalkylierten Polyole getrennt zu verestern und die Ester anschließend bzw. vor der weiteren Umsetzung mit Polyisocyanaten zu mischen. Gegebenfalls kann weiterhin nach der Veresterung noch die Umsetzung von Restmengen Säure mit Epoxiden erfolgen. Solche Verfahren sind beispielsweise beschrieben in EP-A 54105, EP-A 126341 und EP-A 900778.

Acrylsäure und/oder Methacrylsäure werden bezogen auf die Hydroxygruppen der oxalkylierten Polyole in einem Equivalentverhältnis von Säure zu Hydroxid von 1 zu 1,1 bis 1 zu 2,4, bevorzugt von 1 zu 1,2 bis 1 zu 1,8, besonders bevorzugt von 1 zu 1,3 bis 1 zu 1,5 eingesetzt. Anstelle der reinen Säuren können - soweit zugänglich - auch deren Anhydride oder Oligomerisierungsprodukte wie Methacrylsäureanhydrid oder dimere Acrylsäure verwendet werden.

Als azeotrope Schleppmittel kommen Kohlenwasserstoffe sowie deren Halogen-oder Nitro-Substitutionsprodukte in Betracht, sowie weitere Lösungsmittel, die weder mit den Reaktionspartnern reagieren noch sich unter dem Einfluß der sauren Katalysatoren verändern. In bevorzugter Weise werden nicht substituierte Kohlenwasserstoffe eingesetzt. Beispielhaft seien genannt: aliphatische Kohlenwasserstoffe, wie Hexan, Heptan, Octan, Benzinfraktionen verschiedener Siedebereiche, cycloaliphatische Kohlenwasserstoff, wie Cyclopentan, Cyclohexan, Methyl-cyclohexan, oder aromatische Kohlenwasserstoffe, wie Benzol, Toluol oder die isomeren Xylole. In bevorzugter Weise werden solche Lösungsmittel eingesetzt, die im Bereich von 70-120°C sieden. Insbesondere seien hier Cyclohexan, Toluol oder Benzinfraktionen im Siedebereich von 70-120°C genannt. Das mit Wasser nicht mischbare Lösungsmittel kann auch ein Gemisch der obengenannten Stoffe sein. Es wird in einer Menge von 10-100 Gew.-%, bevorzugt 15-50 Gew.-%, besonders bevorzugt 20-40 Gew.-%, bezogen auf das Gewicht der zu veresternden Reaktionskomponenten, eingesetzt.

Als saure Veresterungskatalysatoren können anorganische oder organische Säuren in einer Menge von 0,1-3,0 Gew.-%, bevorzugt 0,5-1,5 Gew.-% bezogen auf das Gewicht der zu veresternden Reaktionskomponenten, eingesetzt werden. Beispiele für solche Veresterungskatalysatoren sind Schwefelsäure, Phosphorsäure, Pyrophosphorsäure, p-Toluolsulfonsäure, Styrol-divinylbenzolsulfonsäure, Chlorsulfonsäure, Chlorameisensäure, bevorzugt Schwefelsäure und p-Toluolsulfonsäure. Weiterhin können auch saure Katalysatoren, die auf Festharzen gebunden sind, z.B. Ionentauscher verwendet werden.

Die Umsetzung kann in Gegenwart eines oder mehrerer Polymerisationsinhibitoren in einer Menge von 0,01-1 Gew.-%, bevorzugt 0,1 - 0,5 Gew. -% bezogen auf das zu veresternde Gemisch durchgeführt werden. Solche Inhibitoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-β-naphthylamin, N-Phenyl-ethanoldiamin, Dinitrobenzol, Picrinsäure, p-Nitroso-dimethylanilin, Diphenylnitrosamin, Phenole, wie p-tert-Butyl-brenzcatechin, 2,5-Di-tert.-amyl-hydrochinon, Nitroxylverbindungen, p-Alkoxyphenole, Di-tert.-butylhydrochinon, Tetramethyl-thiuramdisulfid, 2-Mercaptobenzthiazol und Dimethyl-dithiocarbaminsäure-natriumsalz. Weiterhin wird in einer bevorzugten Variante ein sauerstoffhaltiges Gas, vorzugsweise Luft, in das lösungsmittelhaltige Reaktionsgemisch eingeleitet.

Es wird zunächst die Veresterung der (Meth)Acrylsäure in einem Temperaturbereich von 60 - 140°C, bevorzugt 70 - 120°C, besonders bevorzugt beim Siedepunkt des eingesetzten Lösungsmittels durchgeführt. Hierbei wird ständig Lösungsmittel aus dem Reaktionsgemisch destillativ abgezogen, außerhalb des Reaktionsgefäßes in einem Wasserabscheider kondensiert, von herausgeschleppten Wasser abgetrennt und danach wieder in das Reahrtionsgemisch zurückgeführt. Das Ende der Reaktion ist erreicht, wenn eine dem gewünschten Umsetzungsgrad der Reaktion entsprechende Menge Wasser abgetrennt wurde oder die Säurezahl des Reaktionsgemischs auf den dem gewünschten Umsetzungsgrad entsprechenden Wert gefallen ist. Die Säurezahl beträgt dann zwischen 0,1 und 15, bevorzugt zwischen 1 und 5 mg Kaliumhydroxid pro Gramm Reaktionsgemisch. Im Anschluß kann gegebenenfalls der Veresterungkatalysator neutralisiert, gefällt und/oder abfiltriert werden, gegebenenfalls kann das Lösungsmittel abdestilliert werden und Restsäure mit Epoxyverbindungen, die gegebenenfalls ungesättigte Gruppen tragen können, umgesetzt werden. In einer bevorzugten Variante wird pro Mol Restsäure 0,8 bis 1,5, bevorzugt 0,9 bis 1,1 mol Glycidylmethacrylat zugegeben und anschließend bei 70 bis 130, bevorzugt 80 bis 110°C umgesetzt, bis eine Säurezahl unter 3, bevorzugt unter 1 mg Kaliumhydroxid pro Gramm Reaktionsgemisch erreicht wird.

Sollte das Lösungsmittel noch nicht vor der Reaktion mit der Epoxyverbindung abdestilliert worden sein, so wird es nach dieser Reaktion entfernt. Bevorzugt wird dabei solange bei vermindertem Druck destilliert, bis der Flammpunkt einer Probe oberhalb 100°C liegt.

In einer ebenfalls im Prinzip bekannten Variante können statt der Versterung von Säure und Polyol auch Umersterungsverfahren angewandt werden. Das Prinzip dieser Verfahren ist beispielsweise beschrieben in DE-A 4019788 Hierbei werden statt der (Meth)Acrylsäure deren Ester mit niedermolekularen Alkoholen wie z.B. Methanol oder Ethanol eingesetzt. Es wird dann auch kein Wasser abgespalten, sondern vielmehr der niedermolekulare Alkohol dem Reaktionsgemisch destillativ entzogen. Bei diesem Verfahren kann auf das azeotrope Schleppmittel verzichtet werden.

Die entstandenen hydroxyfunktionellen Partialester aus verschieden oxalkylierten Polyolen und (Meth)acrylsäure zeigen üblicherweise eine dynamische Viskosität von unter 1000 mPa s bei 23°C, sind klar und wasserhell oder leicht gefärbt. Diese Produkte werden in einer zweiten Reaktionsstufe mit einem Di- und/oder Polyisocyanat - im folgenden als Polyisocyanat bezeichnet - umgesetzt.

Gegebenenfalls können neben den hydroxyfunktionellen Partialestern aus verschieden oxalkylierten Polyolen und (Meth)acrylsäure weitere mit Isocyanaten reaktive Verbindungen eingesetzt werden. Für die erfindungsgemäßen Urethanacrylate ist deren Menge jedoch begrenzt: pro Isocyanat-Equivalent kommen weniger als 0,4 Equivalente, bevozugt weniger als 0,2 Equivalente weiterer mit Isocyanaten reaktive Verbindungen zum Einsatz.

Solche Verbindungen können sein: eine freie Hydroxylgruppe aufweisende Ester der Acrylsäure oder Methacrylsäure mit zweiwertigen Alkoholen wie beispielsweise 2-Hydroxyethyl-, 2- oder 3-Hydroxypropyl oder 2-, 3- oder 4-Hydroxybutyl-(meth)-acrylat, sowie deren Umsetzungsprodukte mit Lactonen wie z.B. ε-Caprolacton oder auch beliebige Gemische aus derartigen Verbindungen, (Cyclo)Alkandiole (d.h. zweiwertige Alkohole mit (cyclo)aliphatisch gebundenen Hydroxylgruppen) des Molekular-gewichtsbereichs 62 bis 286, wie z.B. Ethandiol, 1,2- und 1,3-Propandiol, 1,2-,1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, 2-Diethyl-1,3-propandiol, 2,2-Dimethyl-l,3-propandiol, 2-Ethyl-1,3-hexandiol, 2,5-Dimethyl-1,6-hexandiol, 2,2,4-Trimethyl-1,3-pentandiol, (3-Hydroxy-2,2-dimethylpropyl)-3-hydroxy-2,2-dimethylpropionat, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem maximalen Molekulargewicht von ca. 2000, vorzugsweise ca. 1000 und besonders bevorzugt ca. 500. Umsetzungsprodukte der zuvor genannten Diole mit ε-Caprolacton oder anderen Lactonen können ebenfalls als Diole zum Einsatz gelangen. Weiterhin sind an sich bekannte Polyester-Diole aus vorstehenden Diolen und aromatischen und/oder bevorzugt (cyclo)aliphatischen Dicarbonsäuren bzw. deren Anhydriden wie z.B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren verwendbar.

Besonders bevorzugt ist jedoch der Verzicht auf obige, weitere mit Isocyanaten reaktive Verbindungen.

Geeignete Polyisocyanate sind beliebige, aus der Polyurethanchemie an sich bekannte, organische Polyisocyanate mit aliphatisch, cycloaliphatisch und/oder aromatisch gebundenen Isocyanatgruppen, die vorzugsweise ein Molekulargewicht von 144 bis 1000, vorzugsweise 168 bis 300 aufweisen. Geeignet sind beispielsweise Butylendüsocyanat, Hexamethylendiisocyanat (HDI), Isophorondisocyanat (IPDI), 3(4)-Isocyanatomethyl-methylcyclohexyl-isocyanat (IMCI), Trimethylhexamethylendiisocyanat (=2,2,4 und/oder 2,4,4-Trimethylhexamethylendiisocyanat), die isomeren Bis(4,4'-isocyanatocyclohexyl)methane (H₁₂MDI), die isomeren Bis(isocyanatomethyl)-methylcyclohexane, Isocyanatomethyl-1,8-octandüsocyauat, 1,4-Cyclohexylendiisocyanat, 1,4-Phenylendiisocyanat, 2,4- und/oder 2,6-Toluylendiisocyanat (TDI), 1,5-Naphthylendiisocyanat, 2,4'- und/oder 4,4'-Diphenyhnethandiisocyanat (MDI), Triphenylmethan-4,4',4"-trisocyanat oder deren Derivate mit Urethan-, Isocyanurat-, Allophanat-, Biuret-, Uretdion-, Iminooxadiazindionstruktur und/oder Mischungen derselben sowie Mischungen von aliphatischen und aromatischen Di- und/oder Polyisocyanaten. Diese Derivate weisen im allgemeinen ein mittleres Molekulargewicht bis ca. 1.000 auf. Die Herstellung derartiger Derivate ist beispielsweise in den US-A 3 124 605, US-A 3 183 112, US-A 3 919 218, US-A 4 324 879 oder EP-A 798 299 beschrieben.

Bevorzugt werden HDI, IPDI, TDI, H₁₂MDI und/oder durch Trimerisierung von HDI, TDI oder IPDI erhaltene, Isocyanatgruppen aufweisende Polyisocyanate verwendet. Besonders bevorzugt sind HDI und IPDI und deren Mischung.

Die Polyisocyanate kommen in einem Equivalentverhältnis von Isocyanat- zu Hydroxylgruppe von 1 zu 1 bis 1 zu 3, bevorzugt 1 zu 1 bis 1 zu 2, besonders bevorzugt 1 zu 1 bis 1 zu 1,5 zum Einsatz. Der Umsetzungsgrad wird üblicherweise durch Verfolgung des Isocyanat-Gehalts der Reaktionsmischung überwacht. Dazu können sowohl spektroskopische Messungen (Infrarot- oder Nahinfrarot-Spektren) als auch chemische Analysen (Titrationen) von entnommenen Proben vorgenommen werden. Bevorzugt wird die Reaktion bis zu einem Isocyanat-Gehalt von 0,2 % oder darunter durchgeführt. Reaktionstemperaturen werden von 20 bis 100°C, besonders bevorzugt 50 bis 80°C eingehalten. Die Ausgangskomponenten können bei der Durchführung in beliebiger Reihenfolge zur Reaktion gebracht werden. Die Umsetzung erfolgt vorzugsweise in Gegenwart geeigneter Katalysatoren für die Urethanisierungsreaktion wie beispielsweise Zinn(II)octoat, Dibutylzinndilaurat oder tertiären Aminen wie Diazabicyclooctan.

Die so hergestellten Urethanacrylate sind vorteilhaft als Hauptbestandteil von Beschichtungsmitteln zu verwenden. Diese Beschichtungsmittel können weiterhin Zuschlagstoffe und Hilfsstoff enthalten, z.B. an sich bekannte Initiatoren, die eine radikalische Polymerisation nach Bestrahlen mit energiereicher Strahlung wie zum Beispiel UV-Licht auslösen können. Solche Fotoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, (S. 61 - 325). Beispiele sind 1-Hydroxycyclohexyl-phenyl-keton, Benzilketale wie z.B. Benzildimethylketal, Acylphosphinoxide wie z.B. Bis-(2,4,6-trimethylbenzoyl)-phenylphosphinoxid, Diacylphosphinoxide, Benzophenon und dessen Derivate. Sie werden allein oder in Mischung gegebenenfalls auch zusammen mit weiteren Beschleunigern oder Coinitiatoren als Zusatz berechnet auf Festkörper des Beschichtungssystems in Mengen von 0,1 bis 10 Gew.-Teilen, bevorzugt 2 bis 7 Gew.-Teilen, besonders bevorzugt 3 bis 4 Gew.-Teilen verwendet Die Fotopolymerisation kann auch in Inertgasatmosphäre durchgeführt werden, wobei die Menge an Fotoinitiatoren deutlich kleiner als bei Härtung an der Luft gewählt werden kann. Sollen die Beschichtungsmittel mittels Elektronenstrahlen gehärtet werden, kann auf Fotoinitiatoren verzichtet werden.

Die Beschichtungsmittel können mit Verdünnungsmitteln als Zuschlagstoffe gemischt werden, die bei der UV-Härtung ebenfalls (co)polymerisieren. Solche Reaktivverdünner sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Bevorzugt wird propoxyliertes Glycerin. Da die erfindungsgemäßen Urethanacrylate vergleichsweise niederviskos sind, wird im Vergleich zu Urethanacrylaten des Stands der Technik häufig weniger Reaktivverdünner benötigt, um die gleiche Viskosität einzustellen.

Weiterhin kann das erfindungsgemäß hergestellte Beschichtungsmittel mit Hilfs- und Zusatzmitteln (Zuschlagstoffe) der unterschiedlichsten Art abgemischt werden. Hierzu gehören Füllstoffe, Pigmente, Farbstoffe, Glättmittel, Mattierungsmittel, Entlüflungsmittel wie Polyacrylate, Haftvermittler wie Aminoalkyltrialkoxysilane und Verlaufsmittel wie Polysiloxane, die in den in der Beschichtungstechnologie üblichen Mengen eingesetzt werden. Zur Verbesserung der Beständigkeit gegen Witterungseinflüsse wie z.B. Sonnenlicht können Lichtschutzmittel wie UV-Absorber und sterisch gehinderte Amine in den üblichen Mengen zugesetzt werden. Bei Verwendung von UV-Absorbern muß als Photoinitiator meist anteilig ein lägerwellig absorbierender Typ verwendet werden. Der Einsatz von Lichtschutzmitteln und die verschiedenen Typen sind beispielhaft beschrieben in A. Valet, Lichtschutzmittel für Lacke, Vincentz Verlag, Hannover, 1996. Weiterhin ist die Verwendung von im Sinne der radikalischen Polymerisation inerten Lösungsmitteln möglich, die dann zwischen Beschichten und Härten gegebenenfalls durch Zufuhr von Wärme entfernt werden.

Die Beschichtungsmittel enthaltend die erfindungsgemäßen Urethanacrylate sind geeignet zur Erzeugung von hochwertigen Beschichtungen, Überzügen und Lacken auf verschiedenen Substraten wie z.B. Papier, Karton, Leder, Textil, Glas, Kunststoffen, Metall, z.B. Aluminium- oder Stahlbleche, die man gegebenenfalls einer Vorbehandlung unterzogen hat, Metall auch in Form von sogenannten "Coils", Holz insbesondere Parkett oder Holzwerkstoffe wie beispielsweise mitteldichte Faserplatten, Kunststoffwerkstoffe wie z.B. Polycarbonat oder Polyvinylchloridfolien (PVC), mineralische Werkstoffe, z.B. Zement, Ton, Mineralien, Keramik oder solche Substrate aus den genannten Werkstoffen, die bereits beschichtet worden sind, z.B. Automobile oder Automobilteile. Es können auch Substrate, die aus mehreren der genannten Materialien bestehen, beschichtet werden. Besonders geeignet sind die erfindungsgemäßen Beschichtungsmittel für die abriebbeständige Beschichtung von Materialien, die für Fußböden verwendet werden. Insbesondere sind das Parketthölzer und PVC-Folien.

Das Auftragen des Beschichtungsmittels auf das zu beschichtende Material erfolgt mit den in der Lacktechnologie üblichen und bekannten Methoden wie Spritzen, Rakeln, Walzen, Gießen, Tauchen, Schleudern und Sprühen (Vakumat). Das Aushärten des flüssigen Beschichtungsmittels erfolgt durch Bestrahlen mittels ultravioletter Strahlung oder Elektronenstrahlung. Dazu wird das beschichtete Material beispielsweise unter einem Quecksilbermitteldruckstrahler herbewegt. Das Härten mittels UV-Strahlung erfolgt in bekannter Weise und ist z.B. beschrieben in P. K. T. Oldring (Ed.), Chemistry & Technology of UV & EB Formulations For Coatings, Inks & Paints, Vol. 1, 1991, SITA Technology, London, S. 167 - 269.

### Beispiele

Partialester aus oxalkyliertem Polyol und Acrylsäure:
A) In eine Apparatur mit Wasserabscheider, Rührer, Gaseinleitung und Thermometer werden unter Durchleiten von Luft (einfaches Apparaturvolumen pro Stunde) und Überleiten von Stickstoff (doppeltes Apparaturvolumen pro Stunde) 860,6 g eines im Mittel 12fach ethoxilierten, Trimethylolpropan gestarteten Polyethers (Hydroxylzahl 255, dynamische Viskosität 265 mPa·s bei 23°C), 214,2 g eines im Mittel 4fach ethoxilierten, Trimethylolpropan gestarteten Polyethers (Hydroxylzahl 550, dynamische Viskosität 505 mPa·s bei 23°C), 309,6 g Acrylsäure, 9,3 g 4-Toluolsulfonsäure, 3,9 g 4-Methoxyphenol, 0,3 g 2,5-Di-tert.butylhydrochinon und 560,1 g Isooktan eingewogen. Die Reaktionsmischung wird unter Rühren auf Rückflusstemperatur aufgeheizt (ca. 94 -108°C) und unter starken Rückfluss gehalten, bis die Säurezahl einen Wert kleiner als 4,5 erreicht hat. Während dieser Zeit wird eine Wassermenge von etwa 77 g abgeschieden. Anschließend wird der Ansatz auf 50°C abgekühlt. Bei 50°C wird langsam Vakuum anlegt und das Lösungsmittel abdestilliert, bis bei 90°C und Vakuum (< 50 mbar) nichts mehr übergeht. Nach Belüften wird unter Rühren 26,3 g Glycidylmethacrylat zügig zugeben. Es wird eine Stunde bei 100°C nachgerührt, die Säurezahl des Produkts liegt unter 2, die Hydroxylzahl zwischen 80 und 90.
B) Versuch A) wird wiederholt mit dem Unterschied, dass anstelle des im Mittel 4-fach ethoxilierten, Trimethylolpropan gestarteten Polyethers jetzt 214,2 g eines im Mittel 3-fach propoxilierten, Trimethylolpropan gestarteten Polyethers (Hydroxylzahl 550, dynamische Viskosität 1800 mPa·s bei 23°C) verwendet wird.

### Urethanacrylate

Gemäß der folgenden Tabelle werden jeweils in einer Apparatur mit Rührer, Gaseinleitung und Thermometer unter Durchleiten von Luft (einfaches Apparaturvolumen pro Stunde) und Überleiten von Stickstoff (doppeltes Apparaturvolumen pro Stunde) der Partialester aus oxalkyliertem Polyol und Acrylsäure, sowie 0,1 Gew.% auf Gesamtansatz 2,6-Di-tert.butyl-4-methylphenol und 0,05 Gew.% auf Gesamtansatz Zinn(II)ethylhexoat eingewogen und unter Rühren auf 55°C aufgeheizt. Die entsprechenden Isocyanate werden dann so zugetropft, dass mit der exothermen Reaktion eine Temperatur von 55 bis 60°C gehalten wird. Nach Ende der Dosierung (ca. 1 h) wird die Temperatur auf 60°C eingestellt und solange gehalten, bis der NCO-Gehalt unter 0,1 % liegt (ca. 8 h).

| Herstellung der Urethanacrylate | | | | Lackprüfung | |
|---|---|---|---|---|---|
| Beispiel Nr. | Partialester | Isocyanat | Viskosität [23 °C] | Abrieb | Beständigkeit |
| 1 | A [450,9 g] | Mischung aus TDI [25,0 g] und HDI [24,2 g] | 2600 mPa s | 7900 Zyklen pro 100 µm Schicht | 1 (NaOH) / 2 (Ethanol) |
| 2 | B [430,0 g] | IPDI [62,0 g] | 4300 mPa s | 5600 | 1/3 |
| 3 | A [450,9 g] | Erst HDI [24,2 g], dann TDI [25,0 g] | 3100 mPa s | 10100 | 1/2 |
| 4 | A [444,1 g] | IPDI [56,0 g] | 8000 mPa s | 7300 | 1 / 2 |
| 5 | A [450,0 g] | TDI [50,0 g] | 5600 mPa s | 7000 | 1/2 |
| Vergleich Nachstellung Beispiel 6 aus EP-A 53 749 | | | | 4000 | 1 / 2 |
| Vergleich Nachstellung Beispiel 3 aus EP-A 53 749 | | | | 4300 | 1 / 2 |

| | | | | | |
|---|---|---|---|---|---|
| TDI - Desmodur® T80, Bayer AG, Leverkusen, DE; HDI - Desmodur® H, Bayer AG, Leverkusen, DE; IPDI - Desmodur® I, Bayer AG, Leverkusen, DE. | | | | | |

Es wurden 85 Gew. Teile Urethanacrylat mit jeweils mit 16 Gew. Teilen Dipropylenglykoldiacrylat (BASF AG, Ludwigshafen, DE) und 2,5 Gew. Teilen Fotoinitiator Darocur® 1173, Ciba Spezialitätenchemie, Lampertheim, DE, auf gebeizte mitteldichte Faserplatten (MDF) mittels Spiralrakel aufgezogen und mittels UV-Licht (Bandanlage, 1 Strahler, 80 W/cm Lampenlänge [CK-Strahler, IST, Metzingen, DE]) gehärtet. Für die Abriebprüfung wurden Aufzüge wie folgt angefertigt: einmal Handcoater #2 [ca. 18 µm], 2 Durchläufe mit 15 m/min Bandgeschwindigkeit, dann zweimal Handcoater #3 [ca. 30 µm] und 1 Durchlauf 5 m/min Bandgeschwindigkeit. Die erzielte Schichtdicke wurde mikroskopisch bestimmt (Lichtschnittmikroskopie). Für die Beständigkeitsprüfung wurden Aufzüge mittels Spiralrakel ca. 120 µm auf MDF hergestellt und mit einem Durchlauf bei 5 m/min Bandgeschwindigkeit gehärtet.

Die Abriebprüfung erfolgte mit einem Taber Abraser Modell 5130 und einem Taber Abraser Grit Feeder, Modell 155, beide Fa. Erichsen, mit Aluminiumoxid (Alodur® EPL) der Fa. Treibacher Schleifmittel Villach, AT, welches gesiebt (200 µm Maschenweite) und getrocknet (1 Stunde, 80°C) wurde. Die Abriebprüfung wurde gemäß der Bedienungsanleitung BA 155/D - VI/1995 der Fa. Erichsen bei 1000 g Belastung pro Achse, Streumenge 85 (entsprechend 34 g pro 100 Umdrehungen) durchgeführt. Die Kalibrierung erfolgte mit einer Acrylplatte. Bei 2000 Umdrehungen wurden Abrieb 142 mg (Sollwert 127 ± 18 mg) gefunden. Gemessen wurde jeweils die Anzahl Zyklen bis zur Zerstörung der Beschichtung. Zusammen mit der gemessenen Schichtdicke resultierte die angegebene Anzahl der Zyklen pro 100 µm Schicht.

Die Beständigkeitsprüfungen wurden mit 48%igem wässrigem Ethanol und 16%iger Natronlauge durchgeführt. Es wurden jeweils getränkte Wattebäusche für 16 h abgedeckt auf die Beschichtungen gelegt. Anschließend wurden die Oberflächen mit einem trockenen, weichen Tuch abgewischt und visuell abgemustert. Das Ergebnis wurde in Form von Noten (0 - unverändert bis 5 zerstört) festgehalten.

## Patentansprüche

1. Niederviskose strahlenhärtbare Urethanacrylate erhältlich durch Umsetzung eines Di- und/oder Polyisocyanats mit einem hydroxyfünktionellen Partialester der Acryl- und/oder Methacrylsäure auf Basis einer Mischung verschieden oxalkylierter Polyole mit drei oder mehr Hydroxylgruppen, **dadurch gekennzeichnet, dass** die Mischung der oxalkylierten Polyole aus 25 bis 75 mol% Polyol eines Oxalkylierungsgrads zwischen 3 und 5 sowie 75 bis 25 mol% Polyol eines Oxalkylierungsgrads zwischen 8 und 25 besteht.

2. Urethanacrylate, gemäß Anspruch 1, **dadurch gekennzeichnet, dass** sie frei von Hydroxy-C₁₋₄-alkyl-acrylaten und methacrylaten sind.

3. Urethanacrylate gemäß Anspruch 1, **dadurch gekennzeichnet, dass** die Mischung der oxalkylierten Polyole aus 30 bis 45 mol% Polyol eines Oxalkylierungsgrades zwischen 3 und 5 sowie 70 bis 55 mol% Polyol eines Oxalkylierungsgrads zwischen 8 und 15 besteht.

4. Urethanacrylate gemäß Anspruch 1, **dadurch gekennzeichnet, dass** eine Mischung von aliphatischen und aromatischen Di- und/oder Polyisocyanaten eingesetzt wird.

5. Verfahren zur Herstellung der niedrigviskosen strahlenhärtbaren Urethanacrylate gemäß Anspruch 1 **dadurch gekennzeichnet, dass** in der ersten Stufe oxalkylierte Polyole teilweise mit Acryl- und/oder Methacrylsäure [im Folgenden als (Meth)acrylsäure bezeichnet] verestert und in der zweiten Stufe mit Di- und/oder Polyisocyanaten zur Reaktion gebracht werden.

6. Verwendung der Urethanacrylate als Bestandteil von Beschichtungsmitteln, die unter dem Einfluss von energiereicher Strahlung aushärten.

7. Verwendung der Urethanacrylate gemäss Anspruch 1 zur Beschichtung von Papier, Karton, Leder, Textil, Glas, Metall und Kunststoffen.

8. Verwendung der Urethanacrylate gemäss Anspruch 1 zur Beschichtung von Fußböden Holzböden, PVC-Böden und Parkettböden aus Holz und Kunststoffen.

## Claims

1. Low viscosity radiation-hardenable urethane acrylates obtainable by reaction of a di- and/or polyisocyanate with a hydroxyfunctional partial ester of acrylic and/or methacrylic acid based on a mixture of various oxalkylated polyols containing three or more hydroxyl groups, **characterized in that** the mixture of the oxalkylated polyols consists of 25 to 75 mol% of polyol having a degree of oxalkylation between 3 and 5 and also 75 to 25 mol% of polyol having a degree of oxalkylation between 8 and 25.

2. Urethane acrylates according to Claim 1, **characterized in that** they are free of hydroxy-C₁₋₄-alkyl acrylates and methacrylates.

3. Urethane acrylates according to Claim 1, **characterized in that** the mixture of oxalkylated polyols consists of 30 to 45 mol% of polyol having a degree of oxalkylation between 3 and 5 and also 70 to 55 mol% of polyol having a degree of oxalkylation between 8 and 15.

4. Urethane acrylates according to Claim 1, **characterized in that** a mixture of aliphatic and aromatic di- and/or polyisocyanates is used.

5. Process for making the low viscosity radiation-hardenable urethane acrylates according to Claim 1, **characterized in that** in the first stage oxalkylated polyols are partially esterified with acrylic and/or methacrylic acid [hereinafter referred to as (meth)acrylic acid] and in the second stage reacted with di- and/or polyisocyanates.

6. Use of the urethane acrylates as constituent part of coatings that harden under the influence of high-energy radiation.

7. Use of the urethane acrylates according to Claim 1 for coating paper, cardboard, leather, textile, glass, metal and plastics.

8. Use of the urethane acrylates according to Claim 1 for coating flooring wooden floors, PVC floors and parquet floors made of wood and plastics.

## Revendications

1. Acrylates d'uréthane de basse viscosité durcissables par des rayons, pouvant être obtenus par transformation d'un diisocyanate et/ou d'un polyisocyanate avec un ester partiel, à fonctionnalité hydroxy, de l'acide acrylique et/ou méthacrylique à base d'un mélange de différents polyols oxalkylés avec trois groupes hydroxyle ou plus, **caractérisé en ce que** le mélange des polyols oxalkylés est constitué par 25 à 75% en moles de polyol présentant un degré d'oxalkylation entre 3 et 5 ainsi que par 75 à 25% en moles de polyol présentant un degré d'oxalkylation entre 8 et 25.

2. Acrylates d'uréthane selon la revendication 1, **caractérisés en ce qu'**ils sont exempts d'acrylates et de méthacrylates d'hydroxy-C₁₋₄-alkyle.

3. Acrylates d'uréthane selon la revendication 1, **caractérisés en ce que** le mélange des polyols oxalkylés est constitué par 30 à 45% en moles de polyol présentant un degré d'oxalkylation entre 3 et 5 ainsi que par 70 à 55% en moles de polyol présentant un degré d'oxalkylation entre 8 et 15.

4. Acrylates d'uréthane selon la revendication 1, **caractérisés en ce qu'**on utilise un mélange de diisocyanates et/ou de polyisocyanates aliphatiques et aromatiques.

5. Procédé pour la préparation des acrylates d'uréthane de basse viscosité, durcissables par des rayons selon la revendication 1, **caractérisé en ce qu'**on fait réagir dans la première étape des polyols oxalkylés, partiellement avec de l'acide acrylique et/ou méthacrylique [appelé acide (méth)acrylique dans la suite] et dans la deuxième étape avec des diisocyanates et/ou des polyisocyanates.

6. Utilisation des acrylates d'uréthane comme constituant d'agents de revêtement qui durcissent sous l'influence d'un rayonnement riche en énergie.

7. Utilisation des acrylates d'uréthane selon la revendication 1 pour le revêtement de papier, de carton, de cuir, de textile, de verre, de métal et de matériaux synthétiques.

8. Utilisation des acrylates d'uréthane selon la revendication 1 pour le revêtement de planchers, de planchers en bois, de planchers en PVC et de planchers en parquet en bois et en matériaux synthétiques.
